# EUROPÄISCHE PATENTSCHRIFT

(11) **EP 3 590 162 B1**
(45) Veröffentlichungstag und Bekanntmachung des Hinweises auf die Patenterteilung: **13.07.2022**
(21) Anmeldenummer: 17832779.7
(22) Anmeldetag: 21.12.2017
(51) Int. Cl.: H02G 3/06

(54) **HALTEVORRICHTUNG ZUM HALTEN EINES GESCHIRMTEN KABELS**
HOLDING DEVICE FOR HOLDING A SHIELDED CABLE
DISPOSITIF DE RETENUE POUR RETENIR UN CABLE BLINDÉ

(30) Priorität: 03.03.2017 CH 2642017
(43) Veröffentlichungstag der Anmeldung: 08.01.2020
(73) Patentinhaber: Agro AG, 5502 Hunzenschwil (CH)
(72) Erfinder: AUMILLER, Markus, 5502 Hunzenschwil (CH)
(74) Vertreter: Rentsch Partner AG
(86) Internationale Anmeldenummer: PCT/EP2017/084048
(87) Internationale Veröffentlichungsnummer: WO 2018/157962

(56) Entgegenhaltungen:
- AU-A- 6 153 973
- DE-U1- 9 000 794
- GB-A- 666 004
- GB-A- 2 214 728
- GB-A- 2 258 567

## Beschreibung

### TECHNISCHES GEBIET

Die vorliegende Erfindung betrifft eine Haltevorrichtung zum Halten eines Kabels, insbesondere eines Erdungs- oder Abschirmkabels, wie es typischerweise bei Kabeldurchführungen oder Kabeleinführungen an Gehäusen von Geräten oder Schaltschränken eingesetzt wird.

### HINTERGRUND DER ERFINDUNG

Derartige Haltevorrichtungen können einerseits einer Zugentlastung mit Dichtfunktion des Kabels und andererseits einer elektromagnetischen Abschirmung sowie einem Ableiten von Leitungsstörungen dienen. Hierfür wird das Kabel in der Haltevorrichtung axial gesichert und ein elektrischer Kontakt zu einer Kabelabschirmung herstellt, die meist aus einem Schirmgeflecht besteht, das unterhalb einer äusseren Isolation (Kabelmantel) des Kabels angeordnet ist. Gängige Haltevorrichtungen umfassen in der Regel ein hülsenförmiges Basiselement, das über einem Kabel angeordnet wird, ein Kontakt- und/oder Klemmelement, welches das Kabel fixiert und ggf. einen Kontakt zur Kabelabschirmung herstellen kann, und eine erste Spannmutter, welche mit dem Basiselement verbunden werden kann und das Kontakt-/Klemmelement im Basisteil positioniert. Das Basiselement kann als Schraubhülse ausgebildet sein und z.B. mit einem Gehäuse eine Verschraubung eingehen, sodass das Kabel am Gehäuse fixiert ist.

Kabelverschraubungen müssen sicherstellen, dass die Qualität der Schirmung an den sensiblen Verbindungsstellen erhalten bleibt und es keine Schirmungsverluste gibt. Insofern ist es notwendig, nicht nur eine maximal geschirmte Leitung zu verwenden, sondern auch Kabelverschraubungen einzusetzen, die gute elektromagnetische Verträglichkeiten aufweisen. Aus dem Stand der Technik sind verschiedenste Haltevorrichtungen bekannt.

Die WO2012072318A1, publiziert am 07.10. 2011 von derselben Anmelderin, offenbart eine Haltevorrichtung zum Halten eines Kabels umfassend ein hülsenförmiges Basisteil, ein Anschlussteil, das mit dem Basisteil verbindbar ist, und ein elastisch spannbares Klammerteil, das zwischen Basisteil und Anschlussteil angeordnet ist. Das Klammerteil weist elastisch spannbare Klammerstreben, die geeignet sind ein Kabel zu umklammern, und wenigstens einen Spannflügel auf, der bogenartig von einer Klammerstrebe abragt und das Klammerteil elastisch gespannt an einer Innenumfangsfläche des Basisteils abstützt.

Die DE1949189A1, publiziert von der Lapp KG am 01.04.1971, offenbart eine Kabeldurchführung mit einer Erdungsvorrichtung für Kabel mit einem Metallgeflechtmantel bei der das Kabel von einer Druckschraube unter Zwischenschaltung eines Dichtungsringes in ein Unterteil eingepresst ist. Die Druckschraube drückt mit einer konischen Innenfläche auf einen mehrteiligen konischen, das Metallgeflecht umschliessenden Ring. Dieser wird dadurch seinerseits auf ein Geflecht sowie auf eine Endaufweitung des Geflechtes gepresst und klemmt so das Metallgeflecht ein.

Die DE3737345, publiziert am 24.05.1989 von Pflitsch GmbH und Co KG, betrifft eine Vorrichtung zur abgedichteten Verlegung von elastischen Leitungen, die eine äussere Abschirmung in Form eines ummantelten Drahtgeflechtes aufweisen. Die Vorrichtung besteht aus einem Doppelnippel mit endseitigen Gewindestutzen, wobei der Nippel eine Einschubbohrung für einen Dicht- und Quetschkörper aufweist. Auf den Nippel ist weiter eine Druckschraube aufschraubbar, die den Dichtkörper vorspannt. Zwischen Dichtkörperstirnfläche und einem Anschlagkragen ist ein Ringteil aus elektrisch leitendem Material angeordnet, welches zur Einsatzöffnung des Nippels hin sich von radial aussen nach innen konisch verjüngt und dass an der der Einsatzöffnung entgegen gerichteten Seite des Ringteiles ein Erdungskabel befestigt ist.

Die DE1127426, publiziert am 12.04.1962 von Associated Electrical Industries, offenbart eine Stopfbuchse für bewehrte elektrische Kabel aus mindestens drei ineinander schraubbaren Teilstücken und einem aussen konischen, sich verjüngenden Klemmstück zur Abfangung der Armierungsdrähte, das zwischen zwei Teilstücken angeordnet ist, sowie Dichtungsscheiben aus nachgiebigem Material.

Das Schutzrecht US5432301, publiziert am 11.07.1995 von Anton Hummel Verwaltungs GmBH, betrifft eine Kabelverschraubung für Erdungs- oder Abschirmkabel. Diese hat eine Schraubhülse aus elektrisch leitendem Werkstoff, insbesondere aus Metall, und eine damit verbindbare Gegenhülse, die als Druckstutzen oder als Überwurfmutter ausgebildet sein kann. Zum Fixieren eines Metallgeflechts zur Erdung oder Abschirmung des Kabelinneren dient ein durch die Verschraubung von Schraubhülse und Gegenhülse gegen das Kabel pressbarer Klemmeinsatz aus isolierenden Werkstoff. Beim Anziehen eines Gewindes werden Klemmfinger sowie ein Bereich zwischen Schlitzen des Klemmeinsatzes radial gegen das Kabel hin verformt. Der Klemmeinsatz hat dabei an seinem den Klemmfingern abgewandten Bereich eine Verlängerung, aus der abisolierte Drähte des Metallgeflechtes in axialer Richtung zur Herstellung der elektrischen Verbindung überstehen. Die überstehenden Drähte sind um die Stirnseite der Verlängerung nach aussen umbiegbar, sodass die Drähte fest an die Innenseite der elektrisch leitenden Schraubhülse angepresst werden.

Die EP0817316, publiziert am 07.01.1998 von Sumito Wiring Systems, offenbart eine Verbindungskonstruktion zur Verbindung einer Abschirmschicht eines abgeschirmten Kabels. Dieses weist ein inneres rohrförmiges Bauteil auf, welches in einen freigelegten Abschnitt der Schirmschicht einführbar ist. Weiter ist ein leitfähiges äusseres rohrförmiges Bauteil vorhanden, welches an die Aussenseite der Schirmschicht gepasst werden kann. Dieses kann mit dem inneren rohrförmigen Bauteil in Eingriff treten. Die Abschirmschicht ist dazwischen angeordnet um den elektrischen Kontakt mit der Abschirmschicht herzustellen.

Die GB666004, publiziert am 06.02.1952 von William Hawke, offenbart eine mechanische Kupplung für Kabelbewehrungen. Eine Armierungsklemmverschraubung, die einen Sockel mit einem Gewinde zum Eingriff in einen Deckel und einen Fortsatz aufweist, an dem die Kabelarmierung durch das Zusammenwirken eines Rings und des Deckels festgeklemmt wird. Der Ring aus einem Metall mit einer Duktilität in der gleichen Größenordnung wie Kupfer hergestellt. Der Fortsatz 5 kann verjüngt sein, so dass sein kleinster Außendurchmesser gleich dem der Öffnung 6 im Deckel ist.

Die DE9000794, publiziert am 29.03.1990 von der Dr. Eugen Sasse GmbH, offenbart eine Vorrichtung zum Einführen einer abgeschirmten Leitung in ein geschirmtes Gehäuse, wobei eine von der Innenseite des Gehäuses in dessen Wandung einzuschraubende Gewindebuchse und einen in die Gewindebuchse eingesteckten Innenkegel mit einer konischen Durchgangsöffnung für den Durchgang der Adern und der Abschirmung. Sowie einen zwischen Gehäuseinnenseite und Innenkegel angeordneten Außenkegel mit einer Durchgangsöffnung für den Durchgang der Adern, wobei die Abschirmung aus Metall zwischen Innenkegel und Außenkegel einklemmbar ist und durch eine auf die Gewindebuchse aufgeschraubte Mutter mit einer Durchgangsöffnung für die Adern zum Pressen des Außenkegels in den Innenkegel erfolgt. Die aus dem Stand der Technik bekannten Verschraubungen haben unter anderem den Nachteil, dass auftretende Ströme nicht effektiv von der Kabelschirmung an das Gehäuse abgeleitet werden können.

### DARSTELLUNG DER ERFINDUNG

Eine Aufgabe der Erfindung besteht darin zumindest eines der dem Stand der Technik anhaftenden Probleme zu lösen. Eine erfindungsgemässe Kabelverschraubung umfasst in der Regel ein Basiselement, eine erste Spannmutter und ein erstes Klemmelement. Das Basiselement kann weiter einen Sockel umfassen, welcher zur Befestigung und zur Kontaktierung des Basiselementes an einem Gehäuse dient. Mit Vorteil ist eine Auflagefläche des Sockels derart ausgebildet, dass diese an dem Gehäuse zumindest bereichsweise anliegt. Das Basiselement besteht weiter zumindest bereichsweise aus einem elektrisch leitenden Material. Mittig in dem Basiselement kann sich in axialer Richtung eine Durchgangsöffnung zur Durchführung des Kabels erstrecken. Um diese Öffnung kann ein umlaufendes erstes Gewinde angeordnet sein. An einer dem Sockel, bzw. dem Gehäuse, abgewandten Seite kann das Basiselement weiter eine um die Durchgangsöffnung umlaufende Kontaktfläche aufweisen. Die Kontaktfläche dient zum Abgreifen eines elektrischen Kontaktes. Auftretende Ströme des Schirmgeflechtes können so effektiv über die leitenden Bereiche des Basiselementes und vorzugsweise über die in diesem Fall ebenfalls leitende Auflagefläche direkt an das Gehäuse abgegeben werden. Je nach Anordnung der leitenden Bereiche des Basiselementes kann somit die elektrische Kontaktierung mit dem Gehäuse ausschliesslich über die Auflagefläche stattfinden wodurch die Befestigungsmittel zur Befestigung des Basiselementes mit dem Gehäuse geschont werden.

Die erste Spannmutter kann mindestens ein zweites Gewinde zum Wirkverbinden der ersten Spannmutter mit dem mindestens einen ersten Gewinde des Basiselementes umfassen. Das erste Klemmelement ist im montierten Zustand zwischen der Kontaktfläche des Basiselementes und der ersten Spannmutter angeordnet und weist mindestens eine erste Klemmfläche auf. Eine Variante mit mehreren ersten Klemmflächen, welche über den Umfang des Schirmgeflechts verteilt sind ist ebenfalls denkbar. Das erste Klemmelement dient hierbei in der Regel im montierten Zustand zum Anpressen des zwischen der ersten Klemmfläche und der Kontaktfläche angeordneten Schirmgeflechtes an die Kontaktfläche um einen zuverlässigen elektrischen Kontakt der Schirmung zu dem Basiselement herzustellen. Dieser Kontakt zeichnet sich unter anderem dadurch aus, dass dieser auch bei Vibrationen Bestand hat. Weiterhin vorteilhaft ist bei dieser Art der Kontaktierung, dass keine Kräfte von der Kontaktierung den Leiter zusammenpressen und die Gefahr einer Beschädigung desselben so minimiert wird.

Mit Vorteil ist die Kontaktfläche hierbei in radialer Richtung möglichst nahe an der Oberfläche des Kabels angeordnet. Bei der vorliegenden Erfindung wird das Schirmgeflecht nach dem Austritt aus einer Kabelummantelung und vor dem Anliegen auf die Kontaktfläche im Vergleich zu anderen Verschraubungen des Standes der Technik nur gering umgeformt. So können bei diesen Umformungen entstehende mögliche Bruchstellen vermieden werden, welche weiter zu unzureichender Übertragung von Strömen an der Kontaktfläche führen können.

Alternativ oder ergänzend dazu kann die Kontaktfläche konisch nach aussen gerichtet sein. In diesem Fall bietet es sich ebenfalls an, die Kontaktfläche als Zentrierungsmittel des ersten Klemmelementes gegenüber dem Basiselement zu nutzen.

Die Kontaktfläche des Basiselementes kann beispielsweise in einer sich in axiale Richtung erstreckenden Nut des Basiselementes angeordnet sein. Wie oben beschrieben ist es vorteilhaft die Nut mit der Kontaktfläche in radialer Richtung innen, d.h. in der Nähe der Oberfläche des Kabels anzuordnen. Die Nut kann hierbei verschiedene Formen annehmen. Weiter kann die Nut mehreckig oder ringförmig oder konzentrisch um die Mittelachse gestaltet sein. Eine Aussenwand der Nut kann ferner als Mittel zur Zentrierung des ersten Klemmelementes gegenüber dem Basiselement dienen.

Mit Vorteil kann das erste Gewinde in radialer Richtung weiter aussen als die Kontaktfläche, respektive der Nut, angeordnet sein. Ebenfalls vorteilhaft und platzsparend kann eine Kabelverschraubung sein, bei der sich die axiale Position des ersten Gewindes und die der Kontaktfläche überschneiden.

Das erste Klemmelement kann sowohl aus einem leitenden Material wie Metall als auch einem nicht-leitenden Material wie Gummi oder Kunststoff bestehen. Der elektrische Kontakt kann so von dem Schirmgeflecht über die Kontaktfläche an das zumindest bereichsweise leitende Basiselement übergeben werden. Bei einem nachgiebigen Material für das erste Klemmelement kann die erste Klemmfläche erst durch die Deformation ausgebildet werden. Ein gummiartiges, elastisch deformierbares erstes Klemmelement kann beispielsweise durch Andrücken so verformt werden, dass dieses sich an die Formgebung der Kontaktfläche anschmiegt und das Schirmgeflecht effektiv und flächig an diese anpresst.

Mit Vorteil ist das erste Klemmelement weiter radial deformierbar und/oder radial federnd ausgestaltet. Dies kann entweder durch materielle Eigenschaften bedingt sein und/oder durch die Formgebung des ersten Klemmelementes erzielt werden: So kann das erste Klemmelement beispielsweise mindestens einen Schlitz aufweisen. Der mindestens eine Schlitz kann in radialer oder in axialer Richtung orientiert sein. Ebenfalls kann der mindestens eine Schlitz, radial und/oder in axialer Richtungen durchgehend ausgestaltet sein, so dass beispielsweise ein ringförmiges erstes Klemmelement eine C-Form bekommt. Auch erste Klemmelemente, welche aus mehreren Teilen bestehen sind möglich.

Das erste Klemmelement ist mit Vorteil radial aussen von einem ersten Aufnahmeraum umgeben. Dieser kann durch die Nut oder alternativ durch die Formgebung des Basiselementes und/oder der ersten Spannmutter geformt werden. Der Aufnahmeraum kann in axialer Richtung zumindest teilweise von einer an der ersten Spannmutter ausgebildeten Schulter begrenzt werden, welche das erste Klemmelement axial gegen die Kontaktfläche presst. Der erste Aufnahmeraum kann dazu dienen überschüssiges Schirmgeflecht aufzunehmen und/oder Platz bereitzustellen um eine radiale Deformation des ersten Klemmelementes nach aussen zu ermöglichen. Überschüssiges Schirmgeflecht ist hierbei Schirmgeflecht, welches in Richtung des Kabelendes hinter der Klemmung zwischen der Kontaktfläche und der ersten Klemmfläche hervorsteht. Dieses überschüssige Schirmgeflecht kann um das erste Klemmelement umgelegt und von dem Aufnahmeraum, welcher das erste Klemmelement radial aussen umgibt, aufgenommen werden. In diesem Fall wird also das Schirmgeflecht umgelegt, nachdem es den elektrischen Kontakt an die Kontaktfläche abgeben hat. Dies ist vorteilhaft, da möglicherweise entstehende Schäden des Schirmgeflechtes durch die Umlenkung, respektive das Umknicken, des Schirmgeflechtes den elektrischen Pfad nicht beeinflussen.

Die erfindungsgemässe Kabelverschraubung kann ergänzend dazu ein zweites Klemmelement aufweisen, welche zum Klemmen, respektive Halten, des Kabels in radialer Richtung geeignet ist. Die zweite Klemmfläche des zweiten Klemmelementes kann somit zumindest teilweise an dem Aussenmantel des Kabels anliegen. Das zweite Klemmelement kann hierbei zumindest teilweise von einem zweiten Aufnahmeraum in der ersten Spannmutter aufgenommen werden. Der erste Aufnahmeraum und der zweite Aufnahmeraum sind vorteilhalterweise in axialer Richtung durch eine an der ersten Spannmutter ausgebildete Schulter getrennt. Ebenfalls ist der zweite Aufnahmeraum vorzugsweise auf die erste Spannmutter und eine zweite Spannmutter aufgeteilt, wobei die zweite Spannmutter das zweite Klemmelement zwischen der ersten Spannmutter und der zweiten Spannmutter fixiert. Dazu kann die zweite Spannmutter über ein viertes Gewinde anschraubbar an einem dritten Gewinde der ersten Spannmutter ausgebildet sein. Mit Vorzug kann das zweite Klemmelement einen axialen Anschlag für ein Ende eines Kabelmantels des Kabels aufweisen und dieses so in axialer Richtung positionieren.

Alternativ oder ergänzend dazu kann das zweite Klemmelement mehrteilig ausgestaltet sein. Die multiplen zweiten Klemmelemente können hierbei sowohl radial übereinander als auch axial nebeneinander angeordnet sein. Eine Anordnung radial übereinander kann hierbei den Vorteil haben, dass durch die multiplen zweiten Klemmelemente eine optimale Anpassung an den jeweiligen Kabeldurchmesser möglich ist und somit eine möglichst gute Klemm- bzw. Haltewirkung erzielt wird.

Ebenfalls denkbar ist eine zusätzliche Nutzung des zweiten Klemmelementes im Sinne einer Dichtung um die Kabelverschraubung gegen das Kabel abzudichten. Eine Verwendung von weiteren Dichtelementen ist sinnvoll um eine umfangreichere Dichtung der gesamten Kabelverschraubung zu erzielen.

Zur Montage der Kabelverschraubung kann zunächst das Schirmgeflecht des Kabels an dem zu befestigenden Kabelende freigelegt werden. Weiter kann folgend die Verschraubung vorbereitet werden, indem die einzelnen Komponenten der Kabelverschraubung bereits auf das freigelegte Kabel in der zu verbauenden Reihenfolge aufgefädelt werden: So kann im Fall, dass eine zweite Spannmutter und ein zweites Klemmelement vorhanden sind, zunächst die zweite Spannmutter sowie das zweite Klemmelement und erst dann die erste Spannmutter und das erste Klemmelement auf das Kabel geschoben werden. Folgend kann das Schirmgeflecht zur Vorbereitung für die Kontaktierung aufgeweitet werden. Anschliessend kann das Basiselement mit der Durchgangsöffnung auf das Kabelende geschoben werden bis die Kontaktfläche auf das ausgeweitete Schirmgeflecht des Kabelendes trifft. Das Schirmgeflecht wird dann durch das Anlegen der ersten Klemmfläche des auf das Kabel bereits aufgeschobenen ersten Klemmelementes an das Schirmgeflecht festgelegt und durch das Anschrauben der auf das Kabel aufgeschobenen ersten Spannmutter an dem Basiselement fixiert und das Schirmgeflecht entsprechend zwischen dem ersten Klemmelement und dem Basiselement eingespannt.

Wenn das zweite Klemmelement und die zweite Spannmutter aufgefädelt worden sind, können diese nun ebenfalls an den bereits verschraubten Teil der Kabelverschraubung nacheinander angeschoben werden und das zweite Klemmelement durch die zweite Spannmutter an der ersten Spannmutter verschraubt werden. Die vollständig montierte Kabelverschraubung kann dann an dem entsprechenden Gehäuse verschraubt werden und so das Schirmgefecht über das Basiselement mit dem Gehäuse elektrisch verbinden.

### KURZE BESCHREIBUNG DER FIGUREN

Anhand der in den nachfolgenden Figuren gezeigten Ausführungsbeispiele und der dazugehörigen Beschreibung werden Aspekte der Erfindung näher erläutert. Es zeigen:
- Fig. 1: eine erste Ausführungsform einer erfindungsgemässen Kabelverschraubung in einer perspektivischen und teilweise geschnittenen Ansicht;
- Fig. 2: die Kabelverschraubung gemäss Fig. 1 in einer geschnittenen Ansicht;
- Fig. 3A: die Kabelverschraubung gemäss Fig. 1 in einer perspektivischen Explosionsansicht;
- Fig. 3B: einen teilweise geschnitten Ausschnitt aus der Explosionsansicht gemäss Fig. 3A;
- Fig. 4: eine zweite Ausführungsform einer erfindungsgemässen Kabelverschraubung in einer perspektivischen und teilweise geschnittenen Ansicht;
- Fig.5: mehrere Varianten von erfindungsgemässen ersten Klemmelementen.

### BESCHREIBUNG DER AUSFÜHRUNGSFORMEN

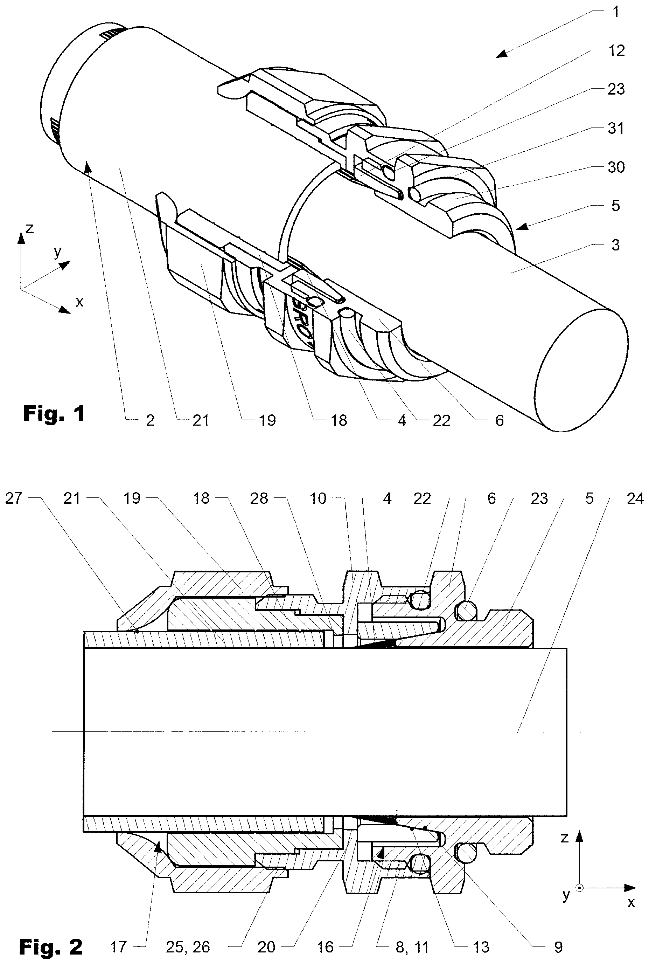

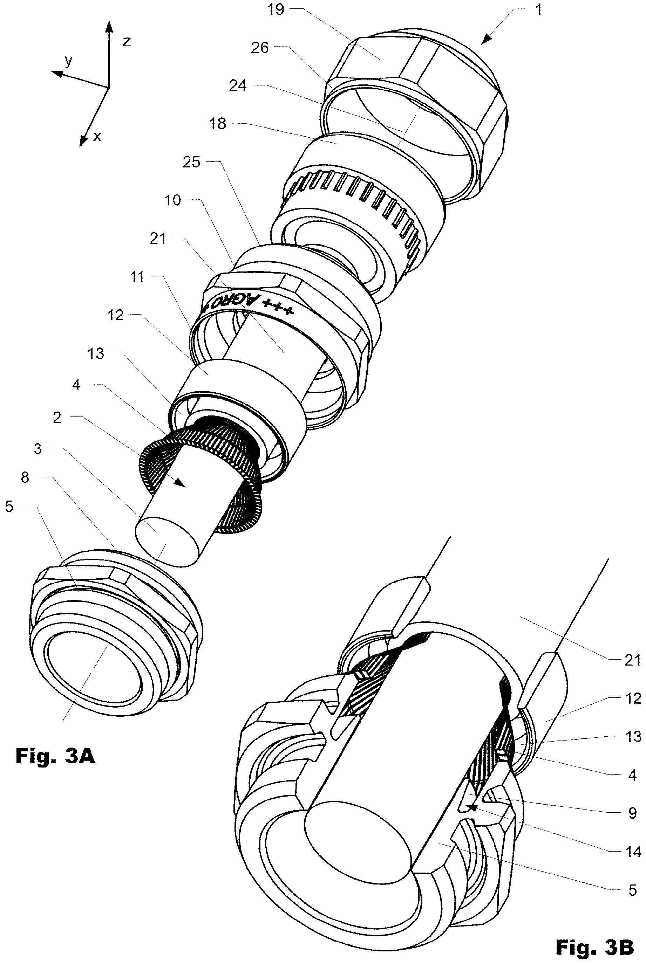

**Figur 1** zeigt eine erste Variante einer erfindungsgemässen Kabelverschraubung 1 in einer perspektivischen und teilweise geschnittenen Ansicht. **Figur 2** zeigt die gleiche Variante in einer geschnittenen Ansicht und **Figur 3A** diese in einer perspektivischen Explosionsansicht. **Figur 3B** zeigt einen Ausschnitt der Figur 3A, welcher zum besseren Verständnis teilweise geschnitten dargestellt ist.

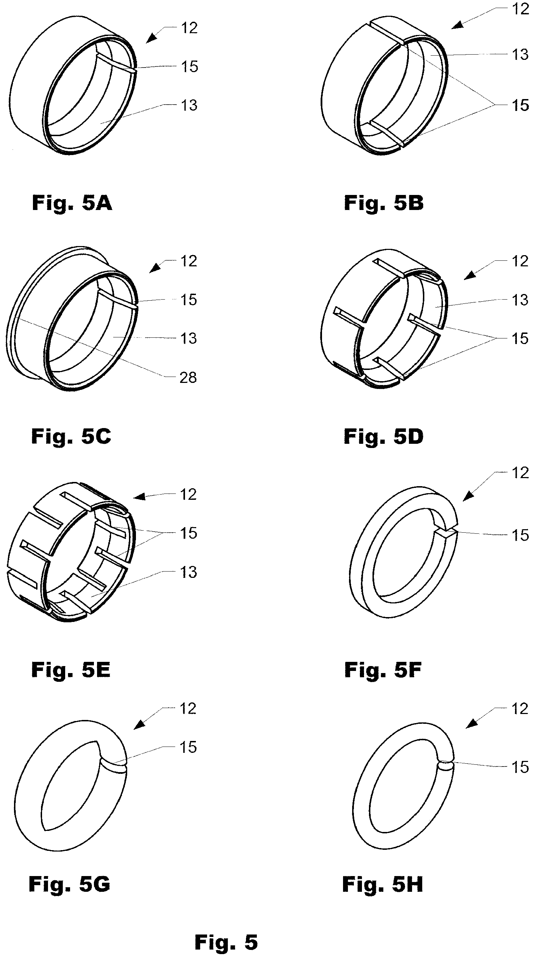

Die erste Variante der Kabelverschraubung 1 umfasst ein Kabel 2 mit einem nicht näher dargestellten innenliegenden Leiter, welcher von einem Schirmgeflecht 4 umgeben ist. Die Kabelverschraubung 1 umfasst weiter ein Basiselement 5, eine erste Spannmutter 10 und ein erstes Klemmelement 12 sowie eine zweite Spannmutter 19 und ein zweites Klemmelement 18. Das Basiselement 5 weist einen Sockel 6 zur Befestigung und zur Kontaktierung des Basiselementes 5 an einem nicht näher dargestellten Gehäuse auf. Am Sockel 6 ist ein Befestigungsmittel 30 zum Befestigen des Sockels 6 an dem Gehäuse vorgesehen. Weiterhin ist eine Auflagefläche 31 des Sockels 6 derart ausgebildet, dass diese an dem Gehäuse zumindest bereichsweise anliegt. Zur Verbesserung der Kontaktierung kann die Kontaktfläche bei Bedarf vorstehende Elemente, z.B. Spitzen, etc., aufweisen. Dies bewirkt, dass eine primäre elektrische Kontaktierung des Basiselementes 5 mit dem Gehäuse über die Auflagefläche 31 stattfinden kann. Das Basiselement 5 besteht hierfür zumindest bereichsweise aus einem elektrisch leitenden Material um eine elektrische Verbindung zwischen der Kontaktfläche 9 und der Auflagefläche 3, respektive dem Gehäuse, herzustellen zu können. Das Basiselement 5 weist weiter eine sich in axiale Richtung (x-Richtung) des Kabels 2 erstreckende Durchgangsöffnung 7 zur Durchführung des Kabels 2 auf, um diese ein umlaufendes erstes Gewinde 8 orientiert ist. Auf einer dem Sockel 6, respektive dem Gehäuse,abgewandten Seite des Basiselementes 5 befindet sich eine konische Kontaktfläche 9 um die Durchgangsöffnung 7. Eine erste Spannmutter 10 kann über ein zweites Gewinde 11 mit dem ersten Gewinde 8 des Basiselementes 5 wirkverbunden werden. Weiter ist ein erstes Klemmelement 12 vorhanden, welches im montierten Zustand in axialer Richtung (x-Richtung) zwischen der Kontaktfläche 9 des Basiselementes 5 und der ersten Spannmutter 10 angeordnet ist und eine erste Klemmfläche 13 aufweist. In einem montierten Zustand der Kabelverschraubung 1 dient das erste Klemmelement 12 zum Anpressen des zwischen der ersten Klemmfläche 13 und der Kontaktfläche 9 angeordneten Schirmgeflechtes 4 an der Kontaktfläche 9. In der gezeigten Variante ist diese Kontaktfläche 9 konisch nach aussen ausgeprägt und in einer sich in axialer Richtung erstreckenden Nut 14 des Basiselementes 5 angeordnet. Die Kontaktfläche 9 verjüngt sich in Richtung vom Sockel weg (negative x-Richtung). Die Nut 14 nimmt in der gezeigten Variante zumindest teilweise das erste Klemmelement 12 auf. In **Figur 2** ist ersichtlich, dass die axiale Position des ersten Gewindes 8 und die der Kontaktfläche 9 sich überschneiden können. Diese Ausführungsvariante ist unter anderem besonders platzsparend. Das erste Klemmelement 12 ist in dieser ersten gezeigten Variante ringförmig gestaltet und weist einen (axial und radial) durchgängigen Schlitz 15 auf. Dieser Schlitz 15 erlaubt es unter anderem dem ersten Klemmelement 12 sich in radialer Richtung zu deformieren. Diese Deformation ist mit Vorteil jedoch federnd, so dass das erste Klemmelement 12 nach der Deformation wieder in seine ursprüngliche (nicht-verformte) Form zurückkehrt. Alternative Ausführungsformen des ersten Klemmelementes 12 sind in **Figur 5** dargestellt.

Radial ausserhalb des ersten Klemmelementes 12 kann sich ein erster Aufnahmeraum 16 befinden. Dieser kann durch die Nut 14 oder alternativ durch die Formgebung des Basiselementes 5 und/oder der ersten Spannmutter 10 ausgebildet werden. Der erste Aufnahmeraum 16 dient einerseits dazu dem ersten Klemmelement 12 die Möglichkeit zu verschaffen sich radial nach aussen zu verformen. Der Aufnahmeraum kann in axialer Richtung zumindest teilweise von einer an der ersten Spannmutter 10 ausgebildeten Schulter 20 begrenzt werden, welche das erste Klemmelement 12 axial gegen die Kontaktfläche 9 presst. Weiter kann der erste Aufnahmeraum 16 ebenfalls dazu dienen überschüssiges Schirmgeflecht 4 aufzunehmen. Dieses überschüssige Schirmgeflecht kann dann um das erste Klemmelement 12 herumgelegt werden und von dem ersten Aufnahmeraum 16 aufgenommen werden (nicht dargestellt).

Mit der ersten Spannmutter 10 ist in der gezeigten Variante eine zweite Spannmutter 19 verbindbar. Hierzu kann die erste Spannmutter 10 ein zusätzliches drittes Gewinde 25 aufweisen, welches zur Wirkverbindung mit einem vierten Gewinde 26 der zweiten Spannmutter 19 dient. Gemeinsam mit der zweiten Spannmutter 19 bildet die erste Spannmutter 10 einen zweiten Aufnahmeraum 17 zur Aufnahme eines zweiten Klemmelementes 18. Der erste Aufnahmeraum 16 und der zweite Aufnahmeraum 17 können in axialer Richtung durch die Schulter 20 getrennt werden. Das zweite Klemmelement 18 klemmt hierbei mit seiner radial nach innen orientierten zweiten Klemmfläche 27 den Aussenmantel 21 ein und erzielt somit eine entsprechende Fixierung desselben. Das zweite Klemmelement 18 kann weiter einen radialen Absatz 28 an seiner Innenseite aufweisen, welcher an die zweite Klemmfläche 27 angrenzt und einen axialen Anschlag für die Kante des Aussenmantels 21 des Kabels 2 bereitstellt. Das zweite Klemmelement 18 kann weiter dahingehend genutzt werden, dass dieses zugleich die Kabelverschraubung 1 gegen das Kabel 2 abdichtet. Zusätzlich dazu kann ein weiteres erstes Dichtelement 22 zum Abdichten der Durchgangsöffnung 7 gegen das Gehäuse sowie ein zweites Dichtelement 23 zum Abdichten des Basiselementes 5 gegen die erste Spannmutter 10 vorhanden sein. Beide Dichtelemente 22, 23 sind in der gezeigten Variante als ein Dichtring ausgeführt.

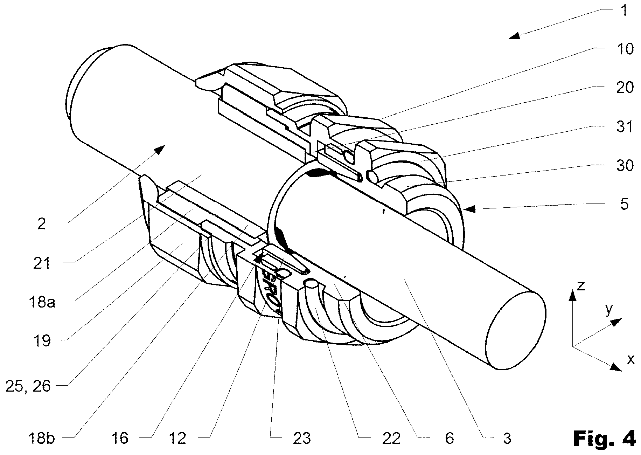

**Figur 4** zeigt eine zweite Variante der erfindungsgemässen Kabelverschraubung 1. Diese unterscheidet sich von der zuvor gezeigten ersten Variante dadurch, dass das zweite Klemmelement 18 mehrteilig ausgestaltet ist und multiple zweite Klemmelemente 18a, 18b vorhanden sind, welche radial übereinander angeordnet sind. Dieser Aufbau hat den Vorteil, dass das zweite Klemmelement 18b je nach Kabeldurchmesser austauschbar ist und somit eine optimale Klemmwirkung respektive zusätzliche Dichtwirkung erzeugen kann.

**Figur 5** zeigt eine Auswahl weiterer möglicher Varianten des ersten Klemmelementes 12. Während in **Figur 5A** ein ringförmiges, geschlitztes erstes Klemmelement 12 mit einer konischen ersten Klemmfläche 13 gezeigt wird, ist in **Figur 5B** das erste Klemmelement zweifach geschlitzt, bzw. mehrteilig ausgestaltet. **Figur 5C** zeigt ein erstes Klemmelement 12 mit einem Schlitz 15 und einem umlaufenden Rand 29. In **Figur 5D** und **Figur 5E** sind alternativ dazu Varianten des ersten Klemmelementes abgebildet, welche multiple, in axialer Richtung nicht durchgängige Schlitze aufweisen. Diese können sich in axialen Richtung erstrecken (**Figur 5D**) oder sich aus unterschiedlichen Richtungen, z.B. alternierend, in das erste Klemmelement 12 erstrecken (**Figur 5E**)**. Figuren 5F** - **5H** zeigen Varianten, die jeweils aus einem deformierbaren Material geformt sind. Die gezeigten Varianten weisen einen Schlitz 15 auf. Jedoch kann durch die Verwendung des deformierbaren Materials der Schlitz 15 auch gänzlich weggelassen werden, da eine Deformation grundsätzlich auch ohne diese Formgebung möglich ist. Weiterhin weisen die gezeigten Varianten des Klemmelementes 12 keine konisch nach innen gerichtete erste Klemmfläche 13 auf. Durch das Verwenden von deformierbaren Material wird das Klemmelement durch die von der ersten Spannmutter 10 aufgebrachten Klemmung derart verformt, dass erst im deformierten Zustand eine erste Klemmfläche 13 ausbildet wird.

**LISTE DER BEZUGSZEICHEN**

| | | | |
|---|---|---|---|
| 1 | Kabelverschraubung | 17 | Zweiter Aufnahmeraum |
| 2 | Kabel | 18 | Zweites Klemmelement |
| 3 | Leiter | 19 | Zweite Spannmutter |
| 4 | Schirmgeflecht | 20 | Schulter |
| 5 | Basiselement | 21 | Aussenmantel |
| 6 | Sockel | 22 | Erstes Dichtelement |
| 7 | Durchgangsöffnung | 23 | Zweites Dichtelement |
| 8 | Erstes Gewinde | 24 | Mittelachse |
| 9 | Kontaktfläche | 25 | Drittes Gewinde |
| 10 | Erste Spannmutter | 26 | Viertes Gewinde |
| 11 | Zweites Gewinde | 27 | Zweite Klemmfläche |
| 12 | Erstes Klemmelement | 28 | Absatz |
| 13 | Erste Klemmfläche | 29 | Rand |
| 14 | Nut | 30 | Befestigungsmittel |
| 15 | Schlitz | 31 | Auflagefläche |
| 16 | Erster Aufnahmeraum | | |

## Patentansprüche

1. Kabelverschraubung (1) für ein Kabel (2) mit mindestens einem Leiter (3) und ein diesen umgebendes Schirmgeflecht (4) umfassend
a. ein Basiselement (5), welches
i. einen Sockel (6) zur Befestigung des Basiselementes (5) an einem Gehäuse aufweist,
ii. zumindest bereichsweise aus einem elektrisch leitenden Material besteht,
iii. eine sich in axialer Richtung (x) des Kabels (2) erstreckende Durchgangsöffnung (7) zur Durchführung des Kabels (2) aufweist,
iv. ein um die Durchgangsöffnung (7) umlaufendes erstes Gewinde (8), sowie
v. eine um die Durchgangsöffnung (7) umlaufende Kontaktfläche (9) aufweist,
b. eine erste Spannmutter (10) mit einem zweiten Gewinde (11) zum Wirkverbinden der ersten Spannmutter (10) mit dem ersten Gewinde (8) des Basiselementes (5), sowie;
c. ein erstes Klemmelement (12) mit einer ersten Klemmfläche (13), wobei das erste Klemmelement (12) im montierten Zustand zum Anpressen des zwischen der ersten Klemmfläche (13) und der Kontaktfläche (9) angeordneten Schirmgeflechtes (4) an der Kontaktfläche (9) dient,
**dadurch gekennzeichnet, dass**
d. das erste Klemmelement (12) im montierten Zustand in axialer Richtung (x) zwischen der Kontaktfläche (9) des Basiselementes (5) und der ersten Spannmutter (10) angeordnet ist.

2. Kabelverschraubung (1) gemäss Patentanspruch 1, **dadurch gekennzeichnet, dass** die Kontaktfläche (9) in einer sich in axiale Richtung erstreckende Nut (14) des Basiselementes (5) angeordnet ist.

3. Kabelverschraubung (1) gemäss Patentanspruch 2, **dadurch gekennzeichnet, dass** die Kontaktfläche (9) und/oder eine Aussenwand der Nut (14) zur Zentrierung des ersten Klemmelementes (12) gegenüber dem Basiselement (5) dient.

4. Kabelverschraubung (1) gemäss einem der vorangehenden Patentansprüche, **dadurch gekennzeichnet, dass** das erste Gewinde (8) in radialer Richtung weiter aussen als die Kontaktfläche (9) angeordnet ist.

5. Kabelverschraubung (1) gemäss einem der vorangehenden Patentansprüche, **dadurch gekennzeichnet, dass** die axiale Position des ersten Gewindes (8) und die der Kontaktfläche (9) sich überschneiden.

6. Kabelverschraubung (1) gemäss einem der vorangehenden Patentansprüche, **dadurch gekennzeichnet, dass** die Kontaktfläche (9) konisch nach aussen gerichtet ist.

7. Kabelverschraubung (1) gemäss einem der vorangehenden Patentansprüche, **dadurch gekennzeichnet, dass** das erste Klemmelement (12) aus einem leitenden oder einem nicht-leitenden Material besteht.

8. Kabelverschraubung (1) gemäss Patentanspruch 7, **dadurch gekennzeichnet, dass** das erste Klemmelement (12) aus Gummi und/oder Metall und/oder Kunststoff besteht.

9. Kabelverschraubung (1) gemäss einem der vorangehenden Patentansprüche, **dadurch gekennzeichnet, dass** das erste Klemmelement (12) ringförmig ist.

10. Kabelverschraubung (1) gemäss einem der vorangehenden Patentansprüche, **dadurch gekennzeichnet, dass** das erste Klemmelement (12) einen Schlitz (15) aufweist.

11. Kabelverschraubung (1) gemäss einem der vorangehenden Patentansprüche, **dadurch gekennzeichnet, dass** das erste Klemmelement (12) aus mehreren Teilen besteht.

12. Kabelverschraubung (1) gemäss einem der vorangehenden Patentansprüche, **dadurch gekennzeichnet, dass** das erste Klemmelement (12) radial deformierbar ist.

13. Kabelverschraubung (1) gemäss einem der vorangehenden Patentansprüche, **dadurch gekennzeichnet, dass** das erste Klemmelement (12) in radialer Richtung federnd ist.

14. Kabelverschraubung (1) gemäss einem der vorangehenden Ansprüche **dadurch gekennzeichnet, dass** das erste Klemmelement (12) radial aussen von einem ersten Aufnahmeraum (16) umgeben ist.

15. Kabelverschraubung (1) gemäss Anspruch 14, **dadurch gekennzeichnet, dass** der erste Aufnahmeraum (16) zur Aufnahme von überschüssigen Schirmgeflecht (4) dient.

16. Kabelverschraubung (1) gemäss einem der vorangehenden Patentansprüche, **dadurch gekennzeichnet, dass** die erste Spannmutter (10) einen zweiten Aufnahmeraum (17) zur Aufnahme eines zweiten Klemmelementes (18) aufweist, welches zum Klemmen des Kabels (2) in radialer Richtung geeignet ist.

17. Kabelverschraubung (1) gemäss Patentanspruch 16, **dadurch gekennzeichnet, dass** der erste Aufnahmeraum (16) und der zweite Aufnahmeraum (17) in axialer Richtung durch eine an der ersten Spannmutter (10) ausgebildeten Schulter (20) getrennt sind.

18. Kabelverschraubung (1) gemäss Patentanspruch 16 oder 17, **dadurch gekennzeichnet, dass** das zweite Klemmelement (18) mittels einer zweiten Spannmutter (19) zwischen der ersten Spannmutter (10) und der zweiten Spannmutter (19) fixiert ist.

19. Verfahren zur Montage einer Kabelverschraubung (1) umfassend folgende Verfahrensschritte:
a. Bereitstellen einer Kabelverschraubung (1) gemäss einer der Patentansprüche 1- 18;
b. Bereitstellen eines Kabels (2) mit einem Leiter (3) und ein diesen umgebendes freiliegendes Schirmgeflecht (4);
c. Auffädeln der ersten Spannmutter (10) auf das Kabel (2);
d. Auffädeln des ersten Klemmelementes (12) auf das Kabel (2);
e. Aufweiten des Schirmgeflechtes (4);
f. Überschieben des ausgeweiteten Schirmgeflechtes (4) über die Kontaktfläche (9) des Basiselementes (5);
g. Anlegen der ersten Klemmfläche (13) des auf das Kabel (2) aufgeschobenen ersten Klemmelementes (12) an das Schirmgeflecht (4);
h. Anschrauben der auf das Kabel (2) aufgeschobenen ersten Spannmutter (10) an dem Basiselement (5).

20. Verfahren zur Montage gemäss dem Patentanspruch 19, **dadurch gekennzeichnet, dass** vor dem Aufschieben der ersten Spannmutter (10) und des ersten Klemmelementes (12) zunächst die zweite Spannmutter (19) gefolgt von dem zweiten Klemmelement (18) auf das Kabel (2) aufgefädelt wird.

21. Verfahren zur Montage gemäss dem Patentanspruch 20, **dadurch gekennzeichnet, dass** nach dem Anschrauben der ersten Spannmutter (10) an dem Basiselement (5) die folgenden abschliessenden Verfahrensschritte durchgeführt werden:
a. Anschieben des auf das Kabel (2) aufgefädelten zweiten Klemmelementes (18) an die erste Spannmutter (10);
b. Befestigen des zweiten Klemmelementes (18) durch Anschrauben der zweiten Spannmutter (19) an der ersten Spannmutter (10).

## Claims

1. Cable gland (1) for a cable (2) comprising at least one conductor (3) and a shielding braid (4) surrounding the latter, comprising
a. a base element (5) which
i. has a base (6) for fastening the base element (5) to a housing,
ii. is composed at least in regions of an electrically conductive material,
iii. has a passage opening (7) extending in the axial direction (x) of the cable (2) for the passage of the cable (2),
iv. has a first thread (8) encompassing the passage opening (7), and
v. a contact surface (9) encompassing the passage opening (7),
b. a first tightening nut (10) with a second thread (11) for operatively connecting the first tightening nut (10) to the first thread (8) of the base element (5), and
c. a first clamping element (12) with a first clamping surface (13), wherein the first clamping element (12), in the mounted state, serves for pressing the shielding braid (4) arranged between the first clamping surface (13) and the contact surface (9) against the contact surface (9),
**characterized in that**
d. the first clamping element (12), in the mounted state, is arranged in the axial direction (x) between the contact surface (9) of the base element (5) and the first tightening nut (10).

2. Cable gland (1) according to Patent Claim 1, **characterized in that** the contact surface (9) is arranged in a groove (14) of the base element (5), said groove extending in the axial direction.

3. Cable gland (1) according to Patent Claim 2, **characterized in that** the contact surface (9) and/or an outer wall of the groove (14) serves for centering the first clamping element (12) in relation to the base element (5).

4. Cable gland (1) according to one of the preceding patent claims, **characterized in that** the first thread (8) is arranged in the radial direction further on the outside than the contact surface (9).

5. Cable gland (1) according to one of the preceding patent claims, **characterized in that** the axial position of the first thread (8) and that of the contact surface (9) overlap.

6. Cable gland (1) according to one of the preceding patent claims, **characterized in that** the contact surface (9) is directed conically outward.

7. Cable gland (1) according to one of the preceding patent claims, **characterized in that** the first clamping element (12) is composed of a conductive or a non-conductive material.

8. Cable gland (1) according to Patent Claim 7, **characterized in that** the first clamping element (12) is composed of rubber and/or metal and/or plastic.

9. Cable gland (1) according to one of the preceding patent claims, **characterized in that** the first clamping element (12) is annular.

10. Cable gland (1) according to one of the preceding patent claims, **characterized in that** the first clamping element (12) comprises a slot (15).

11. Cable gland (1) according to one of the preceding patent claims, **characterized in that** the first clamping element (12) consists of a plurality of parts.

12. Cable gland (1) according to one of the preceding patent claims, **characterized in that** the first clamping element (12) is radially deformable.

13. Cable gland (1) according to one of the preceding patent claims, **characterized in that** the first clamping element (12) is resilient in the radial direction.

14. Cable gland (1) according to one of the preceding claims, **characterized in that** the first clamping element (12) is surrounded radially on the outside by a first receiving space (16) .

15. Cable gland (1) according to Claim 14, **characterized in that** the first receiving space (16) serves for receiving excess shielding braid (4).

16. Cable gland (1) according to one of the preceding patent claims, **characterized in that** the first tightening nut (10) comprises a second receiving space (17) for receiving a second clamping element (18) which is suitable for clamping the cable (2) in the radial direction.

17. Cable gland (1) according to Patent Claim 16, **characterized in that** the first receiving space (16) and the second receiving space (17) are separated in the axial direction by a shoulder (20) formed on the first tightening nut (10).

18. Cable gland (1) according to Patent Claim 16 or 17, **characterized in that** the second clamping element (18) is fixed by means of a second tightening nut (19) between the first tightening nut (10) and the second tightening nut (19).

19. Method for installing a cable gland (1), comprising the following method steps:
a. providing a cable gland (1) according to one of Patent Claims 1-18;
b. providing a cable (2) with a conductor (3) and an exposed shielding braid (4) surrounding the latter;
c. threading the first tightening nut (10) onto the cable (2);
d. threading the first clamping element (12) onto the cable (2);
e. flaring the shielding braid (4);
f. pushing the flared shielding braid (4) over the contact surface (9) of the base element (5);
g. placing the first clamping surface (13) of the first clamping element (12) pushed onto the cable (2) against the shielding braid (4);
h. screwing the first tightening nut (10) pushed onto the cable (2) onto the base element (5).

20. Installing method according to Patent Claim 19, **characterized in that** first of all, before the first tightening nut (10) and the first clamping element (12) are pushed on, the second tightening nut (19) is threaded onto the cable (2) followed by the second clamping element (18).

21. Installing method according to Patent Claim 20, **characterized in that**, after the first tightening nut (10) is screwed onto the base element (5), the following finishing method steps are carried out:
a. pushing the second clamping element (18) threaded onto the cable (2) onto the first tightening nut (10);
b. fastening the second clamping element (18) by screwing the second tightening nut (19) onto the first tightening nut (10).

## Revendications

1. Presse-étoupe (1) pour un câble (2) comprenant au moins un conducteur (3) et une tresse de blindage (4) entourant celui-ci, comportant
a. un élément de base (5), lequel
i. présente un socle (6) pour la fixation de l'élément de base (5) à un boîtier,
ii. est constitué, au moins dans certaines régions, d'un matériau électroconducteur,
iii. présente une ouverture de passage (7) s'étendant dans la direction axiale (x) du câble (2) pour le passage du câble (2),
iv. présente un premier filetage (8) périphérique autour de l'ouverture traversante (7), ainsi que
v. une surface de contact (9) périphérique autour de l'ouverture de passage (7),
b. un premier écrou de serrage (10) doté d'un deuxième filetage (11) pour la liaison fonctionnelle du premier écrou de serrage (10) avec le premier filetage (8) de l'élément de base (5), ainsi que ;
c. un premier élément de serrage (12) doté d'une première surface de serrage (13), le premier élément de serrage (12), dans l'état monté, servant à presser la tresse de blindage (4) disposée entre la première surface de serrage (13) et la surface de contact (9) contre la surface de contact (9),
**caractérisé en ce que**
d. le premier élément de serrage (12), dans l'état monté, est disposé entre la surface de contact (9) de l'élément de base (5) et le premier écrou de serrage (10) dans la direction axiale (x) .

2. Presse-étoupe (1) selon la revendication 1, **caractérisé en ce que** la surface de contact (9) est disposée dans une rainure (14) de l'élément de base (5), laquelle rainure s'étend dans la direction axiale.

3. Presse-étoupe (1) selon la revendication 2, **caractérisé en ce que** la surface de contact (9) et/ou une paroi extérieure de la rainure (14) ser(ven)t au centrage du premier élément de serrage (12) par rapport à l'élément de base (5).

4. Presse-étoupe (1) selon l'une des revendications précédentes, **caractérisé en ce que** le premier filetage (8) est disposé plus à l'extérieur que la surface de contact (9) dans la direction radiale.

5. Presse-étoupe (1) selon l'une des revendications précédentes, **caractérisé en ce que** la position axiale du premier filetage (8) et celle de la surface de contact (9) se chevauchent.

6. Presse-étoupe (1) selon l'une des revendications précédentes, **caractérisé en ce que** la surface de contact (9) est orientée de manière conique vers l'extérieur.

7. Presse-étoupe (1) selon l'une des revendications précédentes, **caractérisé en ce que** le premier élément de serrage (12) est constitué d'un matériau conducteur ou non conducteur.

8. Presse-étoupe (1) selon la revendication 7, **caractérisé en ce que** le premier élément de serrage (12) est constitué de caoutchouc et/ou de métal et/ou de matière synthétique.

9. Presse-étoupe (1) selon l'une des revendications précédentes, **caractérisé en ce que** le premier élément de serrage (12) est annulaire.

10. Presse-étoupe (1) selon l'une des revendications précédentes, **caractérisé en ce que** le premier élément de serrage (12) présente une fente (15).

11. Presse-étoupe (1) selon l'une des revendications précédentes, **caractérisé en ce que** le premier élément de serrage (12) est constitué de plusieurs parties.

12. Presse-étoupe (1) selon l'une des revendications précédentes, **caractérisé en ce que** le premier élément de serrage (12) est déformable radialement.

13. Presse-étoupe (1) selon l'une des revendications précédentes, **caractérisé en ce que** le premier élément de serrage (12) est élastique dans la direction radiale.

14. Presse-étoupe (1) selon l'une des revendications précédentes, **caractérisé en ce que** le premier élément de serrage (12) est entouré radialement à l'extérieur par un premier espace de réception (16).

15. Presse-étoupe (1) selon la revendication 14, **caractérisé en ce que** le premier espace de réception (16) sert à la réception de la tresse de blindage (4) excédentaire.

16. Presse-étoupe (1) selon l'une des revendications précédentes, **caractérisé en ce que** le premier écrou de serrage (10) présente un deuxième espace de réception (17) pour la réception d'un deuxième élément de serrage (18), lequel est approprié au serrage du câble (2) dans la direction radiale.

17. Presse-étoupe (1) selon la revendication 16, **caractérisé en ce que** le premier espace de réception (16) et le deuxième espace de réception (17) sont séparés dans la direction axiale par un épaulement (20) réalisé sur le premier écrou de serrage (10).

18. Presse-étoupe (1) selon la revendication 16 ou 17, **caractérisé en ce que** le deuxième élément de serrage (18) est fixé au moyen d'un deuxième écrou de serrage (19) entre le premier écrou de serrage (10) et le deuxième écrou de serrage (19) .

19. Procédé de montage d'un presse-étoupe (1) comportant les étapes de procédé suivantes :
a. fourniture d'un presse-étoupe (1) selon l'une des revendications 1 à 18 ;
b. fourniture d'un câble (2) comprenant un conducteur (3) et une tresse de blindage découverte (4) entourant celui-ci ;
c. enfilage du premier écrou de serrage (10) sur le câble (2) ;
d. enfilage du premier élément de serrage (12) sur le câble (2) ;
e. évasivement de la tresse de blindage (4) ;
f. poussée de la tresse de blindage évasée (4) sur la surface de contact (9) de l'élément de base (5) ;
g. application, contre la tresse de blindage (4), de la première surface de serrage (13) du premier élément de serrage (12) enfilé sur le câble (2) ;
h. vissage, sur l'élément de base (5), du premier écrou de serrage (10) enfilé sur le câble (2).

20. Procédé de montage selon la revendication 19, **caractérisé en ce qu'**avant l'enfilage du premier écrou de serrage (10) et du premier élément de serrage (12) tout d'abord le deuxième écrou de serrage (19) suivi du deuxième élément de serrage (18) est enfilé sur le câble (2).

21. Procédé de montage selon la revendication 20, **caractérisé en ce qu'**après le vissage du premier écrou de serrage (10) sur l'élément de base (5) les étapes de procédé finales suivantes sont effectuées :
a. poussée, sur le premier écrou de serrage (10), du deuxième élément de serrage (18) enfilé sur le câble (2) ;
b. fixation du deuxième élément de serrage (18) par vissage du deuxième écrou de serrage (19) sur le premier écrou de serrage (10) .
